# EUROPÄISCHE PATENTANMELDUNG

(11) **EP 3 667 871 A1**
(43) Veröffentlichungstag der Anmeldung: **17.06.2020**
(21) Anmeldenummer: 19203210.0
(22) Anmeldetag: 15.10.2019
(51) Int. Cl.: H02K 1/27, H02K 1/02, H02K 1/28

(54) **ELEKTRISCHE MASCHINE**

(30) Priorität: 10.12.2018 DE 102018221359
(71) Anmelder: Baumüller Nürnberg GmbH, 90482 Nürnberg (DE)
(72) Erfinder: JINDRA, Tomás, 592 11 Velka Losenice (CZ); KURFÜRST, Jiri, 59301 Bystrice nad Pern tejnem (CZ); SWARTE, Matthias, 90610 Winkelhald (DE)
(74) Vertreter: FDST Patentanwälte

(57) **Zusammenfassung**

Die Erfindung betrifft eine elektrische Maschine (2) mit einem Rotor (28), der eine Anzahl an gleichartigen, tangential magnetisierten Permanentmagneten (44) aufweist, von denen jeder in jeweils einer zugeordneten Tasche (42) des Rotors (28) angeordnet ist. Die Taschen (42) sind in einer tangentialen Richtung (40) zueinander benachbart angeordnet, wobei jeder Permanentmagnet (44) in der jeweiligen Tasche (42) lediglich in einer einzigen Position montierbar ist. Die Magnetisierungsrichtung (46) der Permanentmagneten (44) wechselt in der tangentialen Richtung (40) ab. Die Erfindung betrifft ferner einen Rotor (28) einer elektrischen Maschine (2).

## Beschreibung

Die Erfindung betrifft eine elektrische Maschine mit einem Rotor, der eine Anzahl an tangential magnetisierten Permanentmagneten aufweist, von denen jeder in jeweils einer zugeordneten Tasche des Rotors angeordnet ist. Ferner betrifft die Erfindung einen Rotor einer elektrischen Maschine.

Industrieanlagen weisen üblicherweise Aktoren auf, die mittels eines Elektromotors angetrieben sind. So werden beispielsweise bei der Kunststoffverarbeitung und der Kunststoffherstellung etwaige Förderschnecken oder Pressstempel üblicherweise mittels eines Elektromotors angetrieben. Hierbei wird beispielsweise ein Stempel oder eine Schnecke eines Kunststoffspritzgeräts mittels des Elektromotors bewegt. Eine weitere Verwendung von Elektromotoren findet sich zum Beispiel im maritimen Bereich, wobei der Elektromotor beispielsweise in einer Gondel an einem Rumpf eines Schiffs angebracht ist.

Die Elektromotoren sind üblicherweise bürstenlos ausgestaltet und weisen einen Stator mit einer Anzahl an Elektromagneten auf, mittels derer bei Betrieb ein rotierendes Magnetfeld erstellt wird. Der Rotor hingegen ist permanenterregt und weist somit eine Anzahl an Permanentmagneten auf, die an einem Rotorkörper befestigt sind. Hierbei ist es erforderlich, dass die Permanentmagneten in einer bestimmten Orientierung hinsichtlich des Rotorkörpers angeordnet werden, sodass sich magnetische Pole an bestimmten, vordefinierten Positionen des Rotors ausbilden. Die Permanentmagneten weisen üblicherweise einen im Wesentlichen rechteckigen Querschnitt auf. Somit ist zunächst nicht eindeutig identifizierbar, in welche Richtung die Magnetisierungsrichtung der Permanentmagneten weist. Folglich muss vor Montage an dem Rotorkörper stets die tatsächliche Magnetisierungsrichtung bestimmt werden, was einen Aufwand erhöht. Alternativ werden die Permanentmagnete bereits unterschiedlich gefertigt und entsprechend deren Magnetisierungsrichtung unterschiedlich gelagert, was die Montage vereinfacht. Hierbei ist jedoch eine zusätzliche Lagerhaltung erforderlich, sodass die Herstellung, und insbesondere die Kosten zur Herstellung, erhöht sind.

Der Erfindung liegt die Aufgabe zugrunde, eine besonders geeignete elektrische Maschine sowie einen besonders geeigneten Rotor einer elektrischen Maschine anzugeben, wobei vorteilhafterweise eine Herstellung vereinfacht ist.

Hinsichtlich der elektrischen Maschine wird diese Aufgabe durch die Merkmale des Anspruchs 1 und hinsichtlich des Rotors durch die Merkmale des Anspruchs 12 erfindungsgemäß gelöst. Vorteilhafte Weiterbildungen und Ausgestaltungen sind Gegenstand der jeweiligen Unteransprüche.

Die elektrische Maschine weist einen Rotor auf. Beispielsweise ist die elektrische Maschine bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 100 kW und 1500 kW, zwischen 400 kW und 1400 kW oder zwischen 600 kW und 1000 kW auf, wobei jeweils zum Beispiel eine Abweichung von 10 kW, 5 kW, 2 kW oder 0 kW vorhanden ist. Alternativ weist die elektrische Maschine insbesondere eine Leistung zwischen 0,1 kW und 30 kW, zwischen 0,2 kW und 25 kW oder zwischen 0,3 kW und 19 kW und insbesondere gleich 10 kW auf, wobei jeweils zum Beispiel eine Abweichung von 2 kW, 1 kW, 0,5 kW oder 0 kW vorhanden ist.

Geeigneterweise weist die elektrische Maschine eine Drehzahl, beispielsweise eine Nenndrehzahl oder maximale Drehzahl, zwischen 10 1/min. und 800 1/min., zwischen 30 1/min. und 600 1/min., zwischen 50 1/min. und 500 1/min. oder zwischen 100 1/min. und 400 1/min. auf, wobei insbesondere eine Abweichung von 100 1/min., 50 1/min., 20 1/min. oder 0 1/min. vorhanden ist. Alternativ weist die elektrische Maschine zweckmäßigerweise eine Drehzahl, beispielsweise eine Nenndrehzahl oder maximale Drehzahl, zwischen 10 1/min. und 5.000 1/min., zwischen 100 1/min. und 3.000 1/min., zwischen 1.000 1/min. und 3.000 1/min. oder zwischen 2.000 1/min. und 3.000 1/min. auf, wobei insbesondere eine Abweichung von 500 1/min., 200 1/min., 100 1/min. oder 0 1/min. vorhanden ist.

Besonders bevorzugt weist die elektrische Maschine ein Drehmoment, beispielsweise ein Maximales- und/oder Nenndrehmoment zwischen 300 Nm und 200.000 Nm, zwischen 500 Nm und 175.000 Nm, zwischen 500 Nm und 150.000 Nm, zwischen 500 Nm und 100.000 Nm oder zwischen 500 Nm und 80.000 Nm auf, wobei insbesondere jeweils eine Abweichung von 100 Nm, 50 Nm, 10 Nm oder 0 Nm vorhanden ist.

Die elektrische Maschine ist beispielsweise ein permanent erregter Synchronmotor. Besonders bevorzugt ist die elektrische Maschine ein Synchron-Reluktanzmotor. Mit anderen Worten ist die elektrische Maschine eine Drehstrom-Synchronmaschine, wobei der Rotor vorzugsweise einen Flusssperrenschnitt oder ausgeprägte Pole aufweist. Hierbei wird bei Betrieb eine Rotationsbewegung des Rotors insbesondere zumindest zusätzlich aufgrund der Reluktanzkraft hervorgerufen, wobei beispielsweise zusätzlich die Lorentzkraft zur Bereitstellung der Rotationsbewegung beiträgt. Besonders bevorzugt wird jedoch lediglich anhand der Reluktanzkraft die Rotationsbewegung des Rotors hervorgerufen.

Vorzugsweise dient die elektrische Maschine dem Antrieb eines Aktors der Industrieanlage, wie eines Förderbands, eines Roboters oder eines Bauteils zur Bearbeitung oder Herstellung eines Bauteils, wie eine Presse oder eine Förderraupe. Beispielsweise ist die elektrische Maschine ein Bestandteil einer Servopresse. Mit anderen Worten wird mittels der elektrischen Maschine insbesondere eine Presse angetrieben. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben. Zum Beispiel ist die elektrische Maschine ein Bestandteil einer Abfüllanlage, einer Spritzgussmaschine oder Textilmaschine.

Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. In einer weiteren Alternative ist die elektrische Maschine ein Bestandteil eines Fahrrads, wie eines Pedelecs, und dient dem Vortrieb des Fahrrads. Beispielsweise ist die elektrische Maschine ein Bestandteil eines Nutz-/Kraftfahrzeugs und insbesondere eines Antriebs des Nutz-/Kraftfahrzeugs. Besonders bevorzugt ist die elektrische Maschine ein Bestandteil eines Hauptantriebs des Nutz-/Kraftfahrzeugs und dient somit dem Vortrieb des Nutz-/Kraftfahrzeugs. Hierfür ist im Montagezustand die elektrische Maschine beispielsweise mit einem Rad des Nutz-/Kraftfahrzeugs gekoppelt, beispielsweise direkt oder mittelbar über ein Getriebe. Mit anderen Worten bildet die elektrische Maschine eine Hauptmaschine des Nutz-/Kraftfahrzeugs oder zumindest eine der Hauptmaschine des Nutz-/Kraftfahrzeugs, sofern das Nutz-/Kraftfahrzeug mehrere Hauptmaschinen aufweist.

Der Rotor ist insbesondere drehbar um eine Rotationsachse gelagert, die parallel zu einer axialen Richtung (Axialrichtung) ist. Geeigneterweise ist der Rotor drehsymmetrisch bezüglich der Rotationsachse ausgestaltet. Insbesondere weist die elektrische Maschine eine Welle auf, die beispielsweise aus einem Stahl erstellt ist. Die Welle ist zweckmäßigerweise konzentrisch zur Rotationsachse angeordnet, und der Rotor ist geeigneterweise auf die Welle aufgesetzt. Hierfür weist der Rotor zweckmäßigerweise eine geeignete Aussparung auf, sodass der Rotor im Wesentlichen hohlzylindrisch ausgestaltet ist. Vorzugsweise ist der Rotor drehfest mit der Welle verbunden, beispielsweise mittels einer Feder-Nut-Verbindung.

Der Rotor weist eine Anzahl an gleichartigen Permanentmagneten auf. Mit anderen Worten unterscheiden sich die Permanentmagneten nicht, wobei sich Unterschiede gegebenenfalls insbesondere lediglich aufgrund von Fertigungstoleranzen ergeben. Folglich sind die Permanentmagnete nicht unterscheidbar. So ist insbesondere die Form der Permanentmagneten gleich und auch deren Vorzugsrichtungen sind vorzugsweise gleich. Geeigneterweise ist zumindest eine Vorzugsrichtung der Permanentmagnete mittels der jeweiligen Magnetisierungsrichtung vorgegeben, und die Magnetisierungsrichtung bezüglich weiterer Merkmale der jeweiligen Permanentmagneten ist gleich. Mit anderen Worten sind die Permanentmagnete insbesondere nicht unterscheidbar.

Die Permanentmagnete sind in tangentialer Richtung (Tangentialrichtung) magnetisiert. Somit treten die Feldlinien der mittels der Permanentmagneten erzeugten Magnetfelder in tangentialer Richtung zwischen diesen aus dem Rotor aus. Die Permanentmagneten selbst erstrecken sich zweckmäßigerweise in im Wesentlichen radialer Richtung. Mit anderen Worten weist der Rotor ein sogenanntes "Speichen"-Design ("Spoke"-Design) auf. Vorzugsweise weisen die Permanentmagneten im Wesentlichen den gleichen Abstand zu der etwaigen Rotationsachse auf.

Der Rotor weist eine Anzahl an Taschen auf, die zweckmäßigerweise der Anzahl der Permanentmagneten entspricht. Hierbei ist jeweils einer der Permanentmagneten in jeweils einer der Taschen angeordnet. Mit anderen Worten ist jedem Permanentmagneten jeweils eine der Taschen des Rotors zugeordnet, und jeder Permanentmagnet ist in der jeweiligen Tasche angeordnet. Vorzugsweise wird jeder Permanentmagnet mittels der jeweiligen Tasche stabilisiert. Die Taschen sind hierbei in tangentialer Richtung zueinander benachbart und vorzugsweise zueinander beabstandet. Mit anderen Worten gehen die Taschen nicht ineinander über. Zum Beispiel sind die Permanentmagneten zueinander beabstandet. Mit anderen Worten liegen die Permanentmagneten mechanisch nicht direkt aneinander an und sind insbesondere mittels der Taschen zueinander beabstandet. Die Permanentmagneten sind vorzugsweise in einer tangentialen Richtung, also insbesondere in einer Umfangsrichtung, zueinander beabstandet.

Die Permanentmagnete sind lediglich in einer, insbesondere einzigen, Position in der jeweiligen Tasche montierbar. Mit anderen Worten ist ein Anordnen der Permanentmagnete in der jeweiligen Tasche lediglich auf eine einzige Weise möglich. Somit wird mittels der Taschen sowohl die Orientierung der Permanentmagneten als auch deren Position vorgegeben.

Die Magnetisierungsrichtung der Permanentmagneten wechselt dabei in tangentialer Richtung ab. Somit sind jeweils gleichartige magnetische Pole aufeinander zu gerichtet, und die mittels der Permanentmagneten erstellt bzw. bereitgestellten Magnetfeldlinien treten in tangentialer Richtung zwischen diesen aus dem Rotor aus. Zusammenfassend sind die in der tangentialen Richtung benachbarten Permanentmagnete lediglich in einer einzigen Position in der jeweiligen Tasche montierbar, sodass die Magnetisierungsrichtung der Permanentmagneten abwechselt. Hierbei wird mittels der Taschen sichergestellt, dass die Orientierung der Permanentmagnete entsprechend ist, also die Magnetisierungsrichtungen entsprechend aufeinander zu bzw. weg gerichtet sind.

Aufgrund der Gleichartigkeit sämtlicher Permanentmagnete ist eine Fertigung der Permanentmagnete vergleichsweise kostengünstig, und es können Gleichteile herangezogen werden. Hierbei wird mittels der Taschen und der eindeutigen Positionierung der Permanentmagneten innerhalb dieser die Magnetisierungsrichtung der Permanentmagnete bezüglich der weiteren Bestandteile des Rotors vorgegeben, sodass eine aufwändige Bestimmung der Magnetisierungsrichtung oder eine unterschiedliche Lagerhaltung der Permanentmagneten nicht erforderlich ist. Vielmehr ist lediglich eine einzige Montageposition ermöglicht. Somit ist eine fehlerhafte Montage der Permanentmagneten und somit eine fälschliche Ausprägung von Magnetpolen des Rotors ausgeschlossen, sodass einerseits eine Qualität erhöht und ein Ausschuss verringert ist. Zudem ist die Herstellung vergleichsweise einfach, weswegen Herstellungskosten reduziert sind.

Zum Beispiel sind die Taschen und/oder die Permanentmagneten derart ausgebildet, dass diese lediglich in der bestimmten Position in der jeweiligen Tasche montierbar sind. Insbesondere sind die Permanentmagnete lediglich in einer einzigen Position in der jeweiligen Tasche anordnenbar. Somit ist lediglich ein Einführen der Permanentmagnete in die Taschen in der bestimmten Position ermöglicht. Aufgrund der Änderung der Magnetisierungsrichtung zwischen benachbarten Permanentmagneten ist eine Ausbildung von Magnetpolen des Rotors vereinfacht.

Insbesondere weist jeder der Permanentmagnete und/oder jede Tasche ein bestimmtes Merkmal auf, sodass lediglich die Montage in der bestimmten Position möglich ist. Beispielsweise unterscheiden sich in der tangentialen Richtung benachbarte Taschen, und insbesondere sind die in der Tangentialrichtung jeweils übernächsten Taschen gleichartig. Beispielsweise weist der Rotor zwischen 10 und 60 derartige Permanentmagnete und somit vorzugsweise ebenfalls zwischen 10 und 60 derartige Taschen auf. Geeigneterweise stehen hierbei die Permanentmagneten aus den Taschen nicht über. Mit anderen Worten handelt es sich um sogenannte vergrabene Permanentmagneten.

Die Permanentmagnete sind beispielsweise aus NdFeB gefertigt oder umfassen dieses. Besonders bevorzugt jedoch sind Permanentmagnete aus einem Ferrit erstellt, was Herstellungskosten reduziert. Beispielsweise weist der Rotor eine Anzahl an Kühlöffnungen auf, die beispielsweise in einer axialen Richtung durch den Rotor hindurch ragen. Die Kühlöffnungen sind beispielsweise zylinderförmigen ausgestaltet, wobei der Querschnitt zum Beispiel rund oder vieleckig, beispielsweise dreieckig, ausgestaltet ist. Bei Betrieb wird vorzugsweise ein Fluid durch die Kühlöffnungen geleitet. Hierfür sind die Kühlöffnungen geeignet, insbesondere vorgesehen und eingerichtet. Das Kühlfluid ist beispielsweise eine Flüssigkeit oder besonders bevorzugt ein Gas, wie Luft, was Herstellungskosten reduziert.

Insbesondere weist die elektrische Maschine einen Stator auf, der vorzugsweise eine Anzahl an Elektromagneten aufweist. Die Elektromagneten sind zweckmäßigerweise zu einer Anzahl an Phasen zusammengeschaltet, insbesondere zu drei Phasen. Die Phasen selbst sind miteinander zweckmäßigerweise in einer Dreiecks- oder Sternschaltung miteinander kontaktiert. Die Phasen sind zweckmäßigerweise mittels eines Frequenzumrichters bestromt. Der Frequenzumrichter ist beispielsweise ein Bestandteil der elektrischen Maschine, oder die elektrische Maschine weist geeignete Anschlüsse für einen derartigen Frequenzumrichter auf, beispielsweise ein Anschlussterminal. In diesem Fall sind der Frequenzumrichter und die elektrische Maschine zweckmäßigerweise Bestandteile eines Antriebs. Vorzugsweise weist der Frequenzumrichter eine Brückenschaltung, beispielsweise eine B6-Schaltung auf. Die elektrische Maschine ist zum Beispiel ein Außenläufer. Besonders bevorzugt jedoch ist die elektrische Maschine ein Innenläufer. Mit anderen Worten umgibt der Stator den Rotor umfangsseitig, insbesondere also in einer radialen Richtung. Vorzugsweise ist die elektrische Maschine als Innenläufer ausgestaltet, sodass der etwaige Stator den Rotor in radialer Richtung außenseitig umgibt.

Beispielsweise ist der Querschnitt jedes Permanentmagneten senkrecht zur axialen Richtung seitlich ausgebuchtet. Auf diese Weise weisen die Permanentmagneten ein größeres Volumen auf, sodass eine Leistung erhöht ist. Insbesondere ist hierbei lediglich eine einzige der Seiten ausgebuchtet, und die verbleibenden Seiten des Querschnitts sind zweckmäßigerweise gerade und schließen zum Beispiel einen Winkel von 90° zueinander ein. Somit ist eine Fertigung unter Lagerhaltung vereinfacht.

Zweckmäßigerweise ist der Querschnitt jedes Permanentmagneten senkrecht zu der axialen Richtung ein Trapez, das zwei zueinander parallele Grundseiten und zwei weitere Seiten aufweist. Mit anderen Worten ist der Querschnitt jedes Permanentmagneten parallel zur tangentialen Richtung trapezförmig. Geeigneterweise ist das Trapez rechtwinklig ausgestaltet, sodass zumindest eine der weiteren Seiten mit den beiden Grundseiten jeweils einen rechten Winkel einschließt. Beispielsweise sind die beiden weiteren Seiten zueinander parallel, sodass der Querschnitt rechteckförmig ist. Besonders bevorzugt jedoch sind die beiden Seiten zueinander geneigt, und der Querschnitt weicht von einem Rechteck ab. Insbesondere ist der Querschnitt folglich halbtrapezförmig. Aufgrund der rechtwinkligen Ausgestaltung ist eine Lagerhaltung und Montage vereinfacht. Aufgrund der Neigung der beiden weiteren Seiten zueinander ist der Querschnitt der Permanentmagnete nicht symmetrisch, weswegen insbesondere im Zusammenhang mit den Taschen die jeweils eindeutige Positionierung vergleichsweise einfach realisierbar ist.

Beispielsweise wird jeder der Permanentmagneten bereits mit der Schrägung der beiden Seiten zueinander erstellt, insbesondere mittels Pressen. Insbesondere sind die Permanentmagneten mittels Sintern erstellt. Alternativ hierzu wird beispielsweise zunächst jeder Permanentmagnet mit einem rechteckförmigen Querschnitt gefertigt. Mit anderen Worten sind die Permanentmagneten quaderförmig ausgestaltet. Die Schrägung der beiden weiteren Seiten zueinander wird beispielsweise mittels Abtragen von Material realisiert. Alternativ hierzu wird Drahterodieren zur Realisierung der Schrägung verwendet.

Zweckmäßigerweise schließen die weiteren Seiten miteinander einen Winkel zwischen 2° und 10° ein. Hierbei sind die weiteren Seiten zueinander beabstandet, und der Schnittpunkt der beiden Seiten wäre von dem Permanentmagneten insbesondere beabstandet. Aufgrund des vergleichsweise spitzen Winkels zwischen den beiden Seiten ist weiterhin vergleichsweise viel Material vorhanden, sodass eine Leistung erhöht ist. Andererseits ist die Schrägung auf diese Weise vergleichsweise zeitsparend herstellbar, insbesondere sofern dies mittels Abtragen von Material erfolgt. Zudem ist auch bei diesem Winkel bereits sichergestellt, dass eine falsche Positionierung innerhalb der Taschen nicht möglich ist, insbesondere sofern die Taschen im Montagezustand zumindest in tangentialer Richtung formschlüssig an den jeweiligen Permanentmagneten anliegen.

Vorzugsweise sind die Grundseiten zueinander in einer radialen Richtung beabstandet und weisen zweckmäßigerweise im Wesentlichen einen tangentialen Verlauf auf. Vorzugsweise verlaufen die beiden Grundseiten im Wesentlichen senkrecht zu der jeweiligen radialen Richtung. Geeigneterweise ist die kürzere der beiden Grundseiten radial nach außen versetzt. Aufgrund einer derartigen Ausgestaltung werden, insbesondere sofern ein Formschluss zwischen den Taschen und den Permanentmagneten erstellt ist, diese bei einer Rotation des Rotors in radialer Richtung gegen die Begrenzung der Taschen gepresst. Mit anderen Worten entsteht eine Keilwirkung, sodass die Permanentmagneten vergleichsweise sicher in den Taschen gehalten werden. Insbesondere ist hierbei zumindest eine der weiteren Seiten senkrecht zur tangentialen Richtung und somit insbesondere senkrecht zur Magnetisierungsrichtung. Aufgrund der Schrägstellung der beiden Seiten ist eine Länge der Seite erhöht, und ein Austritt der Feldlinien aus den Permanentmagneten, die insbesondere stets senkrecht zur jeweiligen Seite erfolgt, verbessert.

Besonders bevorzugt umfasst der Rotor ein Blechpaket, das eine Anzahl an in der axialen Richtung übereinander gestapelt Blechen aufweist. Die Bleche sind zweckmäßigerweise aus einem Eisen erstellt, insbesondere einem Weicheisen, und elektrisch zueinander isoliert. Insbesondere sind die Bleche aus einem Trafoblech erstellt. Die Bleche sind zweckmäßigerweise gleichartig ausgestaltet und vorzugsweise fluchtend übereinander angeordnet. Insbesondere sind die Bleche mittels Stanzen erstellt.

Das Blechpaket umfasst eine Anzahl an Polschuhen, wobei die Anzahl der Polschuhe zu der Anzahl der Taschen korrespondiert. Insbesondere ist die Anzahl der Polschuhe gleich der Anzahl der Taschen. Die Taschen sind mittels der Polschuhe zueinander beabstandet. Insbesondere sind in tangentialer Richtung die Taschen und die Polschuhe abwechselnd angeordnet. Vorzugsweise sind die Taschen zumindest teilweise mittels der Polschuhe gebildet. Hierbei bilden die Polschuhe zweckmäßigerweise zumindest teilweise, vorzugweise vollständig, die Begrenzung der jeweiligen Taschen in der tangentialen Richtung.

Vorzugsweise weist das Blechpaket die Taschen auf, die insbesondere in der axialen Richtung durch das Blechpaket hindurch verlaufen. Insbesondere sind die Taschen in der tangentialen Richtung (Tangentialrichtung) und der radialen Richtung (Radialrichtung) geschlossen. Mit anderen Worten sind die Taschen lediglich in der Axialrichtung geöffnet, sodass ein Einführen der Permanentmagneten in den jeweiligen Taschen lediglich in der axialen Richtung möglich ist. Nach einer Montage sind die Permanentmagneten in diesem Fall sowohl in der radialen als auch tangentialen Richtung von dem Blechpaket umgeben. Insbesondere ist zwischen den Permanentmagneten und dem Blechpaket eine elektrische Isolierung angeordnet, beispielsweise sind die Permanentmagneten mit einem Lack versehen.

Vorzugsweise ist jede Blechlage einstückig ausgestaltet. Mit anderen Worten ist jede Lage des Blechpakets in der axialen Richtung mittels lediglich eines einzigen Blechs gebildet. Auf diese Weise ist eine Fertigung vereinfacht und eine Robustheit erhöht.

Alternativ hierzu sind die einzelnen Blechlagen aus mehreren einzelnen Blechen gebildet. Hierbei sind die einzelnen Bleche jeder Blechlagen vorzugsweise zueinander beabstandet. Mit anderen Worten sind die jeweiligen Abschnitte des Blechpakets, die mittels der jeweiligen Bleche gebildet sind, nicht in direktem mechanischem Kontakt miteinander. Insbesondere sind hierbei sämtliche Polschuhe mittels unterschiedlicher Bleche gebildet. Insbesondere entsprechen somit die Polschuhe den Abschnitten. Zusammenfassend weist jede Blechlage genauso viele einzelne Bleche auf, wie Polschuhe vorhanden sind. Insbesondere sind hierbei die Polschuhe in keinem direkten mechanischen Kontakt miteinander und vorzugsweise lediglich über die Permanentmagneten. Vorzugsweise zumindest jedoch sind die Polschuhe mit Ausnahme der Permanentmagneten nicht mit einem ferromagnetischen Material in direktem mechanischem Kontakt.

Geeigneterweise sind sämtliche Polschuhe an einer gemeinsamen Haltestruktur angebunden. Somit sind die einzelnen Polschuhe miteinander stabilisiert und zweckmäßigerweise folglich auch die Taschen. Somit werden die Permanentmagneten vergleichsweise sicher gehalten. Die Haltestruktur ist zweckmäßigerweise bezüglich der Polschuhe und der Permanentmagneten radial nach innen versetzt. Vorzugsweise wird die Haltestruktur an deren Umfang somit mittels der Polschuhe und der Permanentmagneten umgeben, zweckmäßigerweise vollständig.

Die Haltestruktur ist bevorzugt aus einem para- oder diamagnetischen Material erstellt. Mit anderen Worten weist das Material der Haltestruktur eine magnetische Permeabilität auf, die insbesondere größer als 1, jedoch zweckmäßigerweise kleiner als 100, kleiner als 10 oder beispielsweise kleiner als 5 ist. Alternativ ist die Haltestruktur aus einem diamagnetischen Material erstellt, das somit eine magnetische Permeabilität aufweist, die kleiner als 1 ist. Somit breiten sich die mittels der Permanentmagneten bereitgestellten Magnetfelder nicht und lediglich in vergleichsweise geringem Maß in der Haltestruktur aus, und es wird somit insbesondere ein magnetischer Kurzschluss verhindert. Folglich ist ein Wirkungsgrad erhöht. Geeigneterweise sind die Polschuhe lediglich in direktem mechanischem Kontakt mit der Haltestruktur und den in Tangentialrichtung jeweils benachbarten Permanentmagneten. Die Haltestruktur ist beispielsweise aus einem Metall, wie zum Beispiel einem Aluminium, also reinem Aluminium oder einer Aluminiumlegierung, oder Edelstahl erstellt, wie V2A oder V4A. Auf diese Weise ist eine Robustheit erhöht. In einer weiteren Alternative ist die Haltestruktur aus einem Kunststoff gefertigt. Zweckmäßigerweise ist die Haltestruktur an der etwaigen Welle angebunden, vorzugsweise drehfest. Alternativ hierzu bildet die Haltestruktur zumindest teilweise, insbesondere vollständig, die Welle. Somit ist eine vergleichsweise geringe Anzahl an einzelnen Komponenten vorhanden, weswegen Herstellungskosten reduziert sind.

Beispielsweise sind die Polschuhe zumindest teilweise an der Haltestruktur mittels eines Klebers oder dergleichen befestigt. Besonders bevorzugt jedoch ist an jeden der Polschuhe ein Fortsatz angeformt, der vorzugsweise an der Haltestruktur befestigt ist. Der Fortsatz selbst ist geeigneterweise radial nach innen gerichtet. Insbesondere ist der Fortsatz von der Haltestruktur umschlossen. Zum Beispiel ist zwischen diesen zumindest teilweise ein Formschluss erstellt. Geeigneterweise ist der Fortsatz mittels der Haltestruktur umgossen, insbesondere sofern die Haltestruktur mittels Gießen erstellt wird. Somit ist eine vergleichsweise sichere Anbindung realisiert. Aufgrund des Fortsatzes ist somit ein Befestigungsbereich für die Haltestruktur bereitgestellt, und es ist möglich, die Polschuhe lediglich hinsichtlich deren magnetischer Eigenschaften zu optimieren. Insbesondere ist der Fortsatz mittels des Blechpakets gebildet, und die einzelnen, die Polschuhe bildenden Bleche weisen jeweils einen Bereich auf, der den jeweiligen Fortsatz bildet. Somit werden die den Fortsatz und der den Polschuh bildenden Bereiche des Blechs geeigneterweise in einem Arbeitsschritt mittels Stanzen erstellt, was eine Robustheit erhöht und Herstellungskosten verringert.

In einer weiteren Alternative ist beispielsweise jeder zweite Polschuh in tangentialer Richtung an einem gemeinsamen Haltestern angeformt. Der Haltestern weist vorzugsweise einen inneren Bereich auf, dessen Querschnitt zweckmäßigerweise ringförmig ist. Folglich ist der innere Bereich im Wesentlichen hohlzylindrisch ausgestaltet. Geeigneterweise umgibt der innere Bereich die etwaige Welle umfangsseitig ist beispielsweise an dieser befestigt. Vorzugsweise ist zwischen dem inneren Bereich und der Welle ein direkter mechanischer Kontakt realisiert.

Zweckmäßigerweise weist der Haltestern mehrere Stege auf, die beispielsweise im Wesentlichen radial verlaufen. Die Stege verlaufen hierbei vorzugsweise in radialer Richtung bezüglich des inneren Bereichs nach außen. Alternativ hierzu ist jeder der Polschuhe mittels mehrerer derartiger Stege an weiteren Bestandteilen des Haltesterns angeformt. Vorzugsweise sind die Stege an den jeweiligen Polschuhen, also in jedem zweiten Polschuh in tangentialer Richtung, angeformt. Somit sind diese vorzugsweise einstückig mit dem Haltestern und daher auch miteinander. Zusammenfassend ist jeder zweite Polschuh mittels des Haltesterns stabilisiert, und diese aneinander befestigt. Somit ist eine Robustheit erhöht und eine mechanische Integrität. Zudem ist eine Montage vereinfacht.

Die verbleibenden Polschuhe sind dabei zweckmäßigerweise von dem Haltestern beabstandet. Insbesondere sind die verbleibenden Polschuhe mittels eines para- oder diamagnetischen Materials mechanisch mit dem Haltestern verbunden. Beispielsweise weisen die verbleibenden Polschuhe jeweils den etwaigen Fortsatz auf, der jedoch von dem etwaigen inneren Bereich des Haltesterns beabstandet ist. Aufgrund der Beabstandung jedes zweiten Polschuhs in tangentialer Richtung ist ein magnetischer Kurzschluss verhindert. Bei den miteinander über den Haltestern verbundenen Polschuhen ist aufgrund der Orientierung der Permanentmagnete ein magnetischer Kurzschluss im Wesentlichen ausgeschlossen. Insbesondere ist zwischen den von dem Haltestern beabstandet Polschuhen und dem Haltestern Material vorhanden, und etwaige Hohlräume sind mit dem Material befüllt, das zweckmäßigerweise aus einem para- oder diamagnetischen Material erstellt ist. Somit ist eine Robustheit erhöht. Alternativ hierzu befindet sich in diesen Bereichen Luft, was ein Gewicht reduziert.

Beispielsweise sind die Taschen umfangsseitig vollständig geschlossen. Somit werden die Permanentmagnete stabilisiert und eine Robustheit ist erhöht. Besonders bevorzugt sind die Taschen jedoch radial außenseitig geöffnet. Somit ist ein Gewicht verringert, und es ist möglich, die Permanentmagneten vergleichsweise weit radial nach außen zu setzen.

Zweckmäßigerweise ist der Umfang des Rotors zumindest teilweise mittels des Blechpakets gebildet. Vorzugsweise sind die Permanentmagnete in tangentialer Richtung fluchtend mit dem Blechpaket angeordnet. Aufgrund der fluchtenden Anordnung weist der Rotor somit einen im Wesentlichen glatten Umfang auf, also eine im Wesentlichen glatte Umfangsfläche. Infolgedessen werden dort Verwirbelungen von Umgebungsluft bei einer Rotation des Rotors vermieden, weswegen ein akustischer Eindruck verbessert ist. Zudem wird somit eine Anregung von mechanischen Schwingungen vermieden, weswegen eine mechanische Zuverlässigkeit erhöht ist. Auch ist auf diese Weise ein Abbrechen einzelner Bestandteile verhindert.

Alternativ sind die Permanentmagneten bezüglich der Öffnung der Taschen radial nach innen versetzt. Hierbei weist das Blechpaket vorzugsweise in tangentialer Richtung gerichtete Vorsprünge auf, mittels derer die Öffnung der Taschen begrenzt wird. Insbesondere liegen die Permanentmagneten an den jeweiligen Vorsprüngen an. Mittels der Vorsprünge werden somit die Permanentmagnete gesichert und ein Ablösen ist im Wesentlichen verhindert. Geeigneterweise sind die Vorsprünge zumindest teilweise abgerundet, sodass eine Ausbildung von Verwirbelungen verhindert ist.

Beispielsweise weist der Rotor einen im Wesentlichen runden Außenquerschnitt auf. Somit ist eine Herstellung und Montage vereinfacht. Alternativ hierzu sind die Polschuhe in Radialrichtung nach außen gewölbt. Mit anderen Worten sind die Polschuhe nach außen ausgewölbt ausgestaltet, sodass der Rotor insbesondere einen blumenförmigen Querschnitt aufweist. Aufgrund der Auswölbung sind Rastmomente reduziert.

Beispielsweise ist der Abstand in der tangentialen Richtung jeweilig direkt benachbarter Permanentmagnete konstant. Somit ist eine Fertigung vereinfacht, und es ist eine vergleichsweise große Leistung bereitgestellt. Besonders bevorzugt jedoch ist der Abstand der in der Tangentialrichtung benachbarter Permanentmagnete in der tangentialen Richtung unterschiedlich. Hierbei sind zweckmäßigerweise lediglich zwei unterschiedliche Abstände vorhanden, die sich in tangentialer Richtung abwechseln. Somit sind Paare von Permanentmagneten gebildet, die mittels eines vergrößerten Abstands zueinander in tangentialer Richtung beabstandet sind. Aufgrund der unterschiedlichen Abstände sind wiederum Rastmomente reduziert.

Der Rotor ist ein Bestandteil einer elektrischen Maschine, die beispielsweise ein Elektromotor ist. Der Elektromotor ist beispielsweise ein Synchron-Reluktanzmotor oder ein bürstenloser Gleichstrommotor (BLDC). Der Rotor ist somit geeignet, insbesondere vorgesehen und eingerichtet, innerhalb eines Elektromotors eingesetzt zu werden. In einer Alternative hierzu ist elektrische Maschine ein Generator. Bei Betrieb wird der Rotor zweckmäßigerweise um eine Rotationsachse rotiert, die parallel zu einer axialen Richtung ist.

Der Rotor weist eine Anzahl an gleichartigen, tangential magnetisierten Permanentmagneten aufweist, von denen jeder in jeweils einer zugeordneten Tasche des Rotors angeordnet ist. Die Taschen sind in einer tangentialen Richtung zueinander benachbart angeordnet, und jeder Permanentmagnet ist in der jeweiligen Tasche lediglich in einer einzigen Position montierbar. Die Magnetisierungsrichtung der Permanentmagneten wechselt in der tangentialen Richtung ab. Somit sind jeweils gleichartige magnetische Pole in tangentialer Richtung aufeinander zu gerichtet.

Die im Zusammenhang mit der elektrischen Maschine ausgeführten Weiterbildungen und Vorteile sind sinngemäß auch auf den Rotor zu übertragen und umgekehrt.

Nachfolgend werden Ausführungsbeispiele der Erfindung anhand einer Zeichnung näher erläutert. Darin zeigen:
- Fig. 1: schematisch in einer Schnittdarstellung entlang einer axialen Richtung einen Elektromotor mit einem Rotor,
- Fig. 2: schematisch in einer Schnittdarstellung senkrecht zu einer axialen Richtung den eine Anzahl Polschuhe und in Taschen angeordnete Permanentmagnete aufweisenden Rotor,
- Fig. 3-5: gemäß Fig. 2 jeweils weitere Ausgestaltungsformen des Rotors,
- Fig. 6: ausschnittsweise eine zweite Ausgestaltungsform des Rotors,
- Fig. 7-9: ausschnittsweise jeweils weitere Ausgestaltungsformen der Polschuhe, und
- Fig. 10-14: ausschnittsweise unterschiedliche Ausgestaltungsformen der Taschen.

Einander entsprechende Teile sind in allen Figuren mit den gleichen Bezugszeichen versehen.

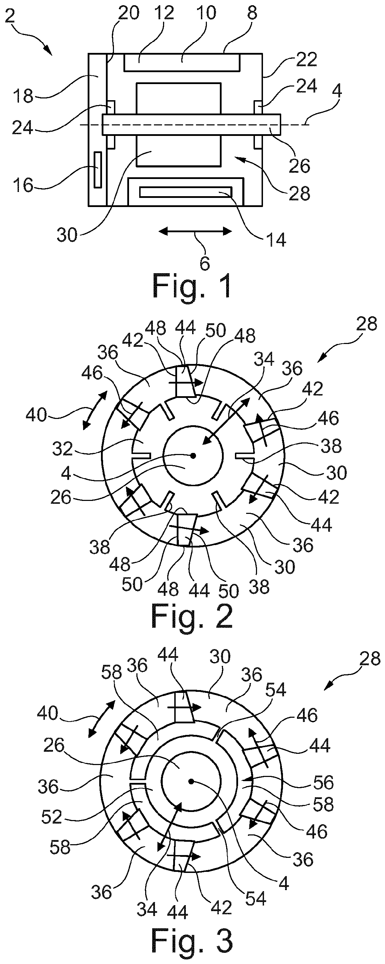

In Fig. 1 ist schematisch vereinfacht eine elektrische Maschine 2 in Form eines bürstenlos ausgestalteten Elektromotors in einer Schnittdarstellung längs einer Rotationsachse 4 dargestellt, die parallel zu einer axialen Richtung 6 (Axialrichtung) ist. Die elektrische Maschine 2 ist ein Bestandteil einer Industrieanlage und dient dem Antrieb eines nicht näher dargestellten Förderbandes. Die elektrische Maschine 2 weist einen innerhalb eines Gehäuses 8 angeordneten Stator 10 auf, der hohlzylindrisch ausgestaltet und konzentrisch zur Rotationsachse 4 angeordnet ist. Der Stator 10 weist ein Blechpaket 12 und daran angebundene Elektromagneten 14 auf. Die Elektromagneten 14 des Stators 10 sind zu drei Phasen zusammengeschaltet, die wiederum in einer Sternschaltung miteinander elektrisch kontaktiert sind.

Die Elektromagneten 14 sind mittels einer Elektronik 16 bestromt, die innerhalb eines Elektronikgehäuses 18 angeordnet ist, das an einer Stirnseite des hohlzylindrisch ausgestalteten Gehäuses 8 angeordnet ist. Das Elektronikgehäuse 18 ist mittels eines B-seitigen Lagerschilds 20 von dem Gehäuse 8 getrennt. Die dem B-seitigen Lager 20 gegenüberliegende Seite des Gehäuses 8 ist mittels eines A-seitigen Lagerschilds 22 verschlossen.

An dem A-seitigen Lagerschild 22 und dem B-seitigen Lagerschild 20 ist jeweils ein Lager 24 in Form eines Kugellagers angebunden, mittels dessen eine Welle 26 eines Rotors 28 drehbar um die Rotationsachse 4 gelagert ist. Die Welle 26 ist aus einem Stahl erstellt und befindet sich auf der Rotationsachse 4 und ist konzentrisch mit dieser. Der Rotor 28 weist ein Blechpaket 30 auf, das in einem mittleren Abschnitt in Axialrichtung 6 die Welle 26 umgibt und rotationsfest an der Welle 26 befestigt.

In Figur 2 ist in einer Schnittdarstellung senkrecht zur Axialrichtung 6 der Rotor 28 gezeigt. Der Rotor 28 weist eine Haltestruktur 32 auf, die an der Welle 26 befestigt ist und mechanisch an dieser anliegt. Die Haltestruktur 32 ist aus einem paramagnetischen oder einem diamagnetischen Kunststoff gefertigt und wird umfangsseitig, also in einer radialen Richtung 34, von dem Blechpaket 30 umgeben, das in diesem Beispiel sechs separate Polschuhe 36 aufweist. Die Polschuhe 36 sind separat zueinander und somit mechanisch nicht miteinander verbunden. Hierbei liegen die Polschuhe 36 an dem Umfang der Haltestruktur 32 an, und an jeden der Polschuhe 36 ist ein radial nach innen gerichteter Fortsatz 38 angeformt, der somit zu der Welle 26 gerichtet ist. Zusammenfassend ist das Blechpaket 30 mittels der einzelnen Polschuhe 36 sowie der jeweiligen Fortsätze 38 gebildet. Das Blechpaket 30 weist folglich in axialer Richtung 6 übereinander gestapelte Blechlagen auf, wobei jede der Blechlagen mittels sechs separater Bleche gebildet ist. In einer nicht näher dargestellten Variante sind mehrere separater Bleche pro Blechlage vorhanden. Die Anzahl der Bleche ist zweckmäßigerweise gleich dem Doppelten der Polzahl.

Jeder Fortsatz 38 ist von der Haltestruktur 32 vollständig umschlossen. Zur Herstellung werden die einzelnen Polschuhen 36 bezüglich der Welle 26 geeignet positioniert und der dazwischen gebildete Hohlraum wird mit einem Kunststoff befüllt, der nach dem Aushärten die Haltestruktur 32 bildet. Somit sind sämtliche Fortsätze 38 von der Haltestruktur umgossen. Daher ist eine vergleichsweise sichere und stabile Befestigung der Polschuhen 36 an der Welle 26 realisiert.

In einer tangentialen Richtung 40 sind die Polschuhe 36 jeweils mittels Taschen 42 zueinander beabstandet. Innerhalb jeder Tasche 42 ist jeweils ein Permanentmagnet angeordnet, die aus einem Ferrit oder NdFeB erstellt sind. In tangentialer Richtung 40 liegen die Permanentmagneten 44 jeweils an den benachbarten Polschuhen 36 mechanisch an, beispielsweise direkt oder über eine Isolierung, wie eine Lackschicht. Folglich sind die Polschuhen 36 miteinander entweder über die Haltestruktur 32 oder die Permanentmagnete 44 mechanisch in Kontakt. Infolgedessen werden die mittels der Permanentmagneten 44 bereitgestellten Magnetfelder nichts radial nach innen sondern aufgrund der Haltestruktur 32 radial nach außen gelenkt, und es sind somit magnetische Kurzschlüsse vermieden.

Die Taschen 42 werden in tangentialer Richtung mittels der Polschuhen 36 begrenzt und somit mittels dieser teilweise gebildet. In radialer Richtung 34 sind die Taschen 42 innenseitig mittels der Haltestruktur 32 begrenzt. In radialer Richtung 34 außenseitig sind die Taschen 42 hingegen geöffnet. Hierbei sind die Permanentmagnete 44 in tangentialer Richtung 40 fluchtend mit dem Blechpaket 30, nämlich den einzelnen Polschuhen 36, angeordnet. Somit weist der Rotor 28 an dessen Umfang eine glatte Oberfläche auf. Infolgedessen treten im Bereich des Übergang zwischen den Taschen 42 und den Permanentmagneten 44 bei einer Rotation des Rotors 28 um die Rotationsachse 4 keine Verwirbelungen auf, was einen akustischen Eindruck verbessert, indem nämlich die Ausbreitung von Schallwellen verhindert oder zumindest reduziert wird. Auch wird auf diese Weise der Rotor 28 nicht zu mechanischen Schwingungen angeregt, was eine Robustheit und Zuverlässigkeit erhöht sowie eine Beschädigung vermeidet.

Die Permanentmagneten 28 weisen eine Magnetisierungsrichtung 46 auf, die in tangentialer Richtung 40 gerichtet ist. Hierbei sind in tangentialer Richtung 40 jeweils gleiche magnetische Pole aufeinander zu gerichtet, sodass die mittels der Permanentmagneten 44 bereitgestellten Magnetfelder im Bereich der Polschuhe 36 aus dem Rotor 28 austreten.

Die Permanentmagnete 44 sind gleichartig. Mit anderen Worten sind die Permanentmagneten 44 nicht unterscheidbar und weisen als Querschnitt senkrecht zur axialen Richtung. 6 ein rechtwinkliges Trapez mit zwei zueinander parallelen Grundseiten 48 und zwei weiteren Seiten 50 auf. Hierbei ist eine der weiteren Seiten 50 senkrecht zu den beiden Grundseiten 48 angeordnet, und die verbleibende der weiteren Seiten 50 schließt mit den Grundseiten 48 einen Winkel von 85° bzw. 95° ein. Somit sind die weiteren Seiten 50 zueinander geneigt und schließen miteinander einen Winkel von beispielsweise 5° ein. Die beiden Grundseiten 48 sind im Wesentlichen in tangentialer Richtung 40 angeordnet, sodass die hierzu senkrechte weitere Seite 50 im Wesentlichen in radialer Richtung 34 verläuft. Aufgrund der Ununterscheidbarkeit der Permanentmagneten 44 ist in diesem Beispiel der Nordpol jeweils mittels der längeren der beiden weiteren Seiten 50 bereitgestellt.

Die kürzere der beiden Grundseiten 48 ist in radialer Richtung 34 jeweils außenseitig angeordnet und bildet somit zumindest teilweise den Umfang des Rotors 28. Mit anderen Worten ist jede kürzere der beiden Grundseiten 48 radial nach außen versetzt. Aufgrund einer derartigen Positionierung werden die Permanentmagnete 44 bei einer Rotationsbewegung des Rotors 28 um die Rotationsachse 4 in die Taschen 42 und somit gegen die Polschuhen 36 gepresst, sodass ein unbeabsichtigtes ablösen verhindert ist. Ferner weist der Rotor 28 ein sogenanntes "Speichen"-Design ("Spoke"-Design) auf.

Die Form der Polschuhe 36 und somit auch der Taschen 42 ist derart gewählt, dass der jeweils zugeordnete Permanentmagnet 44 lediglich in einer einzigen Position montierbar ist. Somit unterscheiden sich die Formen von in tangentialer Richtung 40 benachbarter Polschuhe 36, wohingegen sich die Formen von in tangentialer Richtung 40 übernächster Polschuhe 36 entsprechen. Zusammenfassend ist jeder Permanentmagnet 44 in der jeweiligen Tasche 42 lediglich einer einzigen Position montierbar, wobei die Magnetisierungsrichtung 46 der Permanentmagneten 44 in tangentialer Richtung 40 abwechselt. Aufgrund der lediglich einzigen Position, innerhalb derer jeder Permanentmagnete 44 in der jeweils zugeordneten Tasche 42 positionierbar ist, wird bei Montage aufgrund der Form der Taschen 42 die korrekte Anordnung der Magneten 44 vorgegeben, sodass ein fälschlicher Einbau der Permanentmagneten 44 unterbunden ist. Hierbei ist keine getrennte Lagerhaltung der einzelnen Permanentmagnete 44 erforderlich, was Herstellungskosten weiter reduziert.

Aufgrund der Ausgestaltung ist die mechanische Integrität des Rotors 28 verbessert, und die Permanentmagneten 44 werden auch bei einer Rotationsbewegung lediglich vergleichsweise gering deformiert. Zudem ist lediglich ein vergleichsweise geringes Volumen der Permanentmagnete 44 vorhanden, sodass Herstellungskosten reduziert sind, wobei dennoch eine vergleichsweise große Leistung bereitgestellt ist.

Die Ausdehnung der Polschuhe 36 in tangentialer Richtung 40 ist unterschiedlich, sodass auch der Abstand der zwischen den Polschuhen 36 angeordneten Permanentmagneten 44 in tangentialer Richtung 40 zueinander unterschiedlich ist. In diesem Beispiel ist jeweils der Abstand zwischen den Südpolen der Permanentmagneten 44 verringert, sodass die Nordpole weiter voneinander entfernt sind. Zusammenfassend weisen die Südpole der Permanentmagneten 44 zueinander in tangentialer Richtung 40 jeweils den gleichen jedoch im Vergleich zu den Nordpolen zueinander vergrößerten Abstands in tangentialer Richtung 40 auf. Aufgrund der unterschiedlichen Abstände ist ein Rastmoment des Rotors 28 verringert.

In Figur 3 ist eine alternative Ausgestaltungsform des Rotors 28 gezeigt, wobei die Permanentmagnete 44 sowie deren Magnetisierungsrichtung 46 nicht verändert ist. Auch die Form der Taschen 42 ist nicht abgewandelt. Jedoch ist das Blechpaket 30 des Rotors 28 abgewandelt und weist einen inneren Bereich 52 auf, der hohlzylindrisch ausgestaltet ist. Der innere Bereich 52 umgibt die Welle 26 umfangsseitig und ist an dieser drehfest angebunden. Die Form der Polschuhe 36 ist nicht abgewandelt, jedoch ist in tangentialer Richtung 40 jeder zweite Polschuh 36, in dem Beispiel die jeweils den Nordpol aufweisenden Polschuhe 36, mittels eines Stegs 54 an dem inneren Bereich 52 angeformt. Die Stege 54 verlaufen in radialer Richtung 34, und der innere Bereich 52 sowie die Stege 54 bilden einen Haltestern 56, an dem somit jeder zweite Polschuh 36 in der tangentialen Richtung 40 angeformt ist.

Die verbleibenden Polschuhen 36 sind von dem Haltestern 56 beabstandet und weisen in diesem Beispiel auch keinen Fortsatz 38 auf. Somit weist das Blechpaket 30 pro Blechlagen vier zueinander separate Bleche auf, nämlich die die drei jeweils separaten Polschuhen 36 bildenden Bleche und das den Haltestern 56 mit den daran angeformten Polschuhen 36 bildende Blech. Aufgrund der Ausgestaltung sind somit lediglich die den Nordpol bildenden Polschuhe 36 miteinander mechanisch mittels eines ferromagnetischen Materials verbunden. Zwischen dem inneren Bereich 52 und den beabstandeten Polschuhen 36 sind drei in axialer Richtung 6 verlaufende Schlitze 58 gebildet, die beispielsweise mit einem Kunststoff oder einem Harz befüllt sind. Somit ist eine Stabilität erhöht. Alternativ hierzu sind diese frei und somit mit Luft befüllt. Infolgedessen ist ein Gewicht des Rotors 28 verringert.

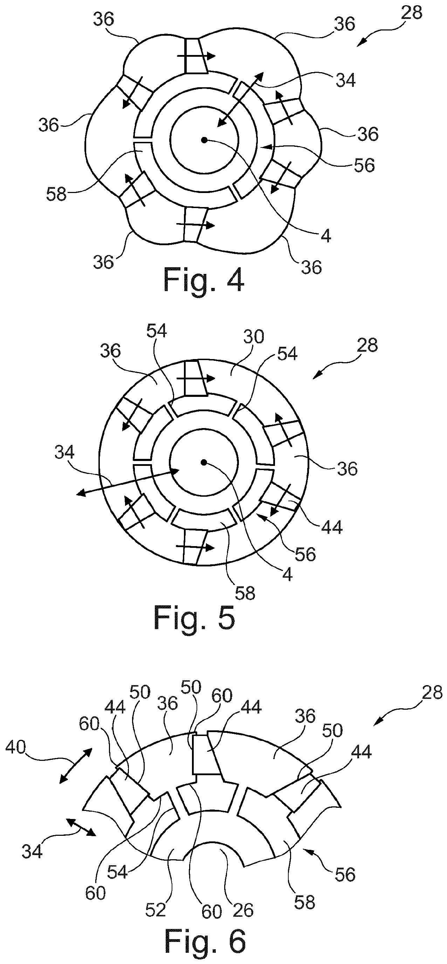

In Figur 4 ist eine Abwandlung des in Figur 3 gezeigten Rotors 28 gezeigt. Als einziger Unterschied zur vorhergehenden Ausführungsform sind die Polschuhen 36 in radialer Richtung 34 nach außen gewölbt. Somit weist der Rotor 28 keinen kreisrunden Außenquerschnitt mehr auf, sondern dieser ist vielmehr blumenförmig ausgestaltet. Jede Wölbung ist entsprechend eines Kreisbogens, wobei der Mittelpunkt des Kreisbogens von der Rotationsachse 4 in Richtung des jeweiligen Polschuhs 36 verschoben ist. Aufgrund der Wölbung sind wiederum Rastmomente reduziert.

In Figur 5 ist eine weitere Ausgestaltungsform des Rotors 28 gezeigt. In dieser Ausführungsform ist jede Blechlagen des Blechpakets 30 einstückig, und der Haltestern 58 weist somit genauso viele Stege 54 auf, wie Polschuhe 36 vorhanden sind. Auch in diesem Beispiel verlaufen die Stege 54 in radialer Richtung 34. Somit sind insgesamt sechs Schlitze 58 vorhanden.

In Figur 6 ist ausschnittsweise eine Abwandlung des in Figur 5 dargestellten Rotors 28 gezeigt. Hierbei ist der Haltestern 56 nicht abgewandelt. Auch ist die Form der Permanentmagnet 44 unverändert belassen. Jedoch sind die Permanentmagnete 44 in radialer Richtung 34 von dem Umfang des Rotors 28 nach innen versetzt. Die den im Wesentlichen in der radialen Richtung 34 verlaufenden weiteren Seiten 50 zugeordneten Polschuhe 36 weisen in tangentialer Richtung 40 gerichtete Vorsprünge 60 auf, die in radialer Richtung 34 den jeweils zugeordneten Permanentmagneten 44 umgreifen. Somit weist jeder zweite Polschuh 36 in tangentialer Richtung 40 insgesamt vier derartige Vorsprünge 60 auf.

Aufgrund der Vorsprünge 60 ist eine Positionierung der Permanentmagneten 44 in der jeweiligen Tasche 42 vereinfacht. Aufgrund des trapezförmigen Querschnitts der Permanentmagnete 44 sind derartige Vorsprünge bei den verbleibenden Polschuhen 36 nicht erforderlich. Auch ist, wie bei den vorhergehenden Ausgestaltungsformen, aufgrund der verlängerten weiteren Seite 50 eine Konzentration des magnetischen Flusses vorhanden.

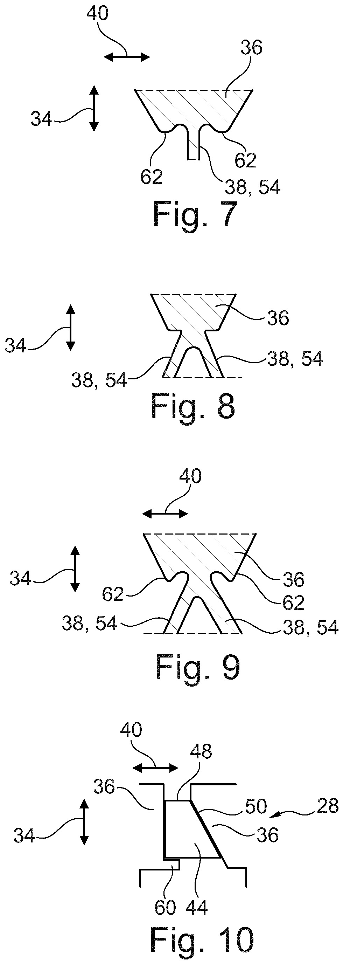

In Figur 7 ist eine alternative Ausgestaltungsform der Polschuhen 36 gezeigt, an die wiederum entweder der Fortsatz 38 oder der Steg 54 angeformt ist. Zusätzlich ist jedoch jeder Polschuhen 36 an der Innenseite in radialer Richtung 34 nicht mehr kreisförmig gebogen wie in den vorherigen Ausführungsformen. Die Innenseite weist in tangentialer Richtung 40 jeweils endseitig eine Ausbuchtung 62 auf. Aufgrund der beiden Ausbuchtungen 62 ist eine Formung des Magnetfelds vereinfacht.

In Figur 8 ist eine weitere Ausgestaltungsform des Blechpakets 30 gezeigt. An zumindest einem der Polschuhe 36 ist an der radialen Innenseite anstatt einem Fortsatz 38 bzw. Steg 54 nunmehr zwei derartige Fortsätze 38 bzw. Stege 54 angeformt, die bezüglich der radialen Richtung 34 geneigt sind. Aufgrund der beiden Fortsätze 38 bzw. Stege 54 sowie deren jeweiligen Neigung ist ein Ausbreiten der Magnetfeldlinien in Richtung der Welle 26 weiter vermieden.

In Figur 9 ist eine Abwandlung des in Figur 8 gezeigten Polschuhs 36 dargestellt. An diesem sind wiederum zwei Fortsätze 38 bzw. Stege 54 angeformt, die zueinander und bezüglich der radialen Richtung 34 geneigt sind. Zudem weist der Polschuh 36 wiederum die beiden Ausbuchtungen 62 auf, die sich an der radialen Innenseite befinden und den Abschluss in tangentialer Richtung 40 bilden.

In Figur 10 ist eine weitere Ausgestaltungsform des Rotors 28 ausschnittsweise gezeigt, der entsprechend der in Figur 6 dargestellten Variante ausgestaltet ist. Hierbei ist jedoch lediglich der radial innere Vorsprung 60 bei jedem zweiten Polschuh 36 in tangentialer Richtung 40 vorhanden. Somit weisen diese Polschuh 36 lediglich zwei Vorsprünge 60 auf, die in tangentialer Richtung 40 gerichtete sind. Der verbleibende Polschuh 36 ist in tangentialer Richtung 40 an dessen radial äußeren Seite stumpf und fluchtet mit der kürzeren Grundseite 48 der jeweils zugeordneten Permanentmagneten 44. Somit weisen diese Polschuhe 36 im Bereich des Übergangs von der Grundseite 48 zu der längeren der weiteren Seiten 50 einen Knick auf, wobei der Verlauf der beiden Polschuh 36 in radialer Richtung 34 außerhalb bezüglich der Permanentmagneten 44 im Wesentlichen radial ist. Zudem steht der Polschuh 36 in radialer Richtung 34 bezüglich des Permanentmagneten 44 auch innenseitig über. Somit ist vergleichsweise wenig Material vorhanden, weswegen ein Gewicht des Blechpakets 30 verringert ist, wobei dennoch eine mechanische Integrität erhöht ist.

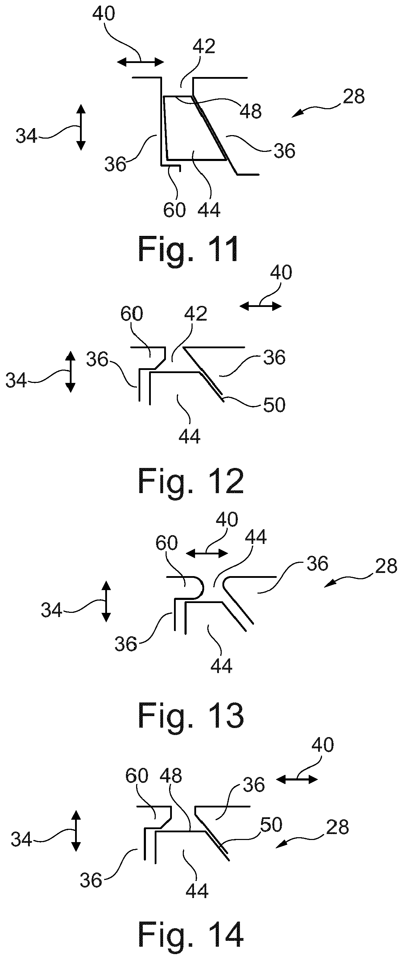

In Figur 11 ist eine weitere Abwandlung des Rotors 28 gezeigt, wobei die Polschuhe 36, die die Vorsprünge 60 aufweisen, unverändert sind. Auch sind die Permanentmagnete 44 nicht verändert. Bei dieser Ausgestaltungsform ist jedoch bei dem verbleibenden Polschuh 36 die Begrenzung in tangentialer Richtung 40 im Wesentlichen geradlinig. Somit ist die Tasche 42 an dessen radial äußeren Ende im Vergleich zu der kürzeren Grundseite 48 des zugeordneten Permanentmagneten 44 verringert. In einer weiteren Ausführungsform weist die Begrenzung dieses Polschuh 36 in tangentialer Richtung 40 wiederum einen Knick auf, wobei sich dieser jedoch bei der längeren der beiden Grundseiten 48 befindet.

In Figur 12 ist eine weitere Abwandlung gezeigt, wobei die Polschuhe 36, die keinen der Vorsprünge 60 aufweisen, und somit der jeweils längeren der weiteren Seiten 50 zugeordnet ist, im Vergleich zur vorhergehenden Ausführungsform nicht verändert ist. Dahingegen weisen die verbleibenden Polschuh 36 an deren radial äußeren Ende wiederum die Vorsprünge 60 auf. Somit ist die Öffnung der Tasche 42 weiter verringert. Geeigneterweise weisen dabei die dem Permanentmagneten 44 zugewandten Flächen des Vorsprung 60 eine Schrägung auf, was ein Einführen der Permanentmagneten 44 vereinfacht. Aufgrund der Überdeckung der Permanentmagnete 44 in tangentialer Richtung 40 mittels der Polschuhe ist das Rastmoment weiter verringert.

In Figur 13 ist eine weitere Ausgestaltungsform des Rotors 28 gezeigt. Hierbei sind die radial äußeren Vorsprung 60 abgerundet, und auch die tangentialen Enden der weiteren Polschuhe 36 sind an deren radialer Außenseite abgerundet. Infolgedessen sind keine spitzen Kanten vorhanden, die eine vergleichsweise geringe mechanische Integrität aufweisen. Dadurch ist ein Ausbilden von Verwirbelungen verhindert und das Rastmoment weiter verringert.

In Figur 14 ist basierend auf Figur 12 eine weitere Abwandlung des Rotors 28 gezeigt. Die der längeren der beiden weiteren Seiten 50 zugeordnete Polschuhen 36 sind an deren radial äußeren Ende in tangentialer Richtung 40 stumpf, und überdecken die jeweils zugeordneten Permanentmagneten 44, insbesondere die kürzere der beiden Grundseiten 48, in tangentialer Richtung 40 teilweise. Somit werden die Permanentmagnete 44 mit beiden Polschuhen 36 in der jeweiligen Tasche 42 gehalten, wobei keine vergleichsweise spitzen Bereiche vorhanden sind, sodass eine mechanische Robustheit erhöht ist. Zudem sind Rastmomente reduziert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: elektrische Maschine
- 4: Rotationsachse
- 6: axiale Richtung
- 8: Gehäuse
- 10: Stator
- 12: Blechpaket des Stators
- 14: Elektromagnet
- 16: Elektronik
- 18: Elektronikgehäuse
- 20: B-seitiges Lagerschild
- 22: A-seitiges Lagerschild
- 24: Lager
- 26: Welle
- 28: Rotor
- 30: Blechpaket des Rotors
- 32: Haltestruktur
- 34: radiale Richtung
- 36: Polschuh
- 38: Fortsatz
- 40: tangentiale Richtung
- 42: Tasche
- 44: Permanentmagnet
- 46: Magnetisierungsrichtung
- 48: Grundseite
- 50: weitere Seite
- 52: innerer Bereich
- 54: Steg
- 56: Haltestern
- 58: Schlitz
- 60: Vorsprung
- 62: Ausbuchtung

## Patentansprüche

1. Elektrische Maschine (2) mit einem Rotor (28), der eine Anzahl an gleichartigen, tangential magnetisierten Permanentmagneten (44) aufweist, von denen jeder in jeweils einer zugeordneten Tasche (42) des Rotors (28) angeordnet ist, die in einer tangentialen Richtung (40) zueinander benachbart angeordnet sind, wobei jeder Permanentmagnet (44) in der jeweiligen Tasche (42) lediglich in einer einzigen Position montierbar ist, und wobei die Magnetisierungsrichtung (46) der Permanentmagneten (44) in der tangentialen Richtung (40) abwechselt.

2. Elektrische Maschine (2) nach Anspruch 1,
**dadurch gekennzeichnet,**
**dass** der Querschnitt jedes Permanentmagneten (44) senkrecht zu einer axialen Richtung (6) ein rechtwinkliges Trapez mit zwei zueinander parallelen Grundseiten (48) und zwei weiteren Seiten (50) ist, die zueinander geneigt sind.

3. Elektrische Maschine (2) nach Anspruch 2,
**dadurch gekennzeichnet,**
**dass** die weiteren Seiten (50) miteinander einen Winkel zwischen 5° und 10° einschließen.

4. Elektrische Maschine (2) nach Anspruch 2 oder 3,
**dadurch gekennzeichnet,**
**dass** die Grundseiten (48) zueinander in einer radialen Richtung (34) beabstandet sind, wobei die kürzere der beiden radial nach außen versetzt ist.

5. Elektrische Maschine (2) nach einem der Ansprüche 1 bis 4,
**dadurch gekennzeichnet,**
**dass** der Rotor (28) ein Blechpaket (30) umfasst, das eine zu der Anzahl an Taschen (42) korrespondierenden Anzahl an Polschuhen (36) aufweist, die mittels der Taschen (42) in tangentialer Richtung (40) beabstandet sind, und mittels derer die Taschen (24) zumindest teilweise gebildet sind.

6. Elektrische Maschine (2) nach Anspruch 5,
**dadurch gekennzeichnet,**
**dass** jeder der Polschuhe (36) an einer gemeinsamen Haltestruktur (32) angebunden ist, die aus einem para- oder diamagnetischen Material erstellt ist.

7. Elektrische Maschine (2) nach Anspruch 6,
**dadurch gekennzeichnet,**
**dass** an jedem der Polschuhe (36) ein radial nach innen gerichtet Fortsatz (38) angeformt ist, der von der Haltestruktur (32) umschlossen ist, insbesondere umgossen.

8. Elektrische Maschine (2) nach Anspruch 5,
**dadurch gekennzeichnet,**
**dass** in tangentialer Richtung (40) jeder zweite Polschuh (36) an einem gemeinsamen Haltestern (56) angeformt ist, wobei die verbleibenden Polschuhe (36) von dem Haltestern (56) beabstandet sind.

9. Elektrische Maschine (2) nach einem der Ansprüche 5 bis 8,
**dadurch gekennzeichnet,**
**dass** die Taschen (42) radial außenseitig geöffnet sind, wobei die Permanentmagnete (44) in tangentialer Richtung (40) fluchtend mit dem Blechpaket (30) angeordnet sind.

10. Elektrische Maschine (2) nach einem der Ansprüche 5 bis 9,
**dadurch gekennzeichnet,**
**dass** die Polschuhe (36) in radialer Richtung (34) nach außen gewölbt sind.

11. Elektrische Maschine (2) nach einem der Ansprüche 1 bis 10,
**dadurch gekennzeichnet,**
**dass** der Abstand benachbarter Permanentmagnete (44) in der tangentialen Richtung (40) unterschiedlich ist.

12. Rotor (28) einer elektrischen Maschine (2) nach einem der Ansprüche 1 bis 11.
